Europäisches Patentamt

European Patent Office

Office européen des brevets

(19)

(11) Veröffentlichungsnummer: **0 210 363**
**B1**

(12) **EUROPÄISCHE PATENTSCHRIFT**

(45) Veröffentlichungstag der Patentschrift:
**18.01.89**

(21) Anmeldenummer: **86106799.9**

(22) Anmeldetag: **20.05.86**

(51) Int. Cl.⁴: **B60T 17/00**, B01D 53/26

(54) **Lufttrockner für Druckluftanlagen.**

(30) Priorität: **29.06.85  DE 3523406**

(43) Veröffentlichungstag der Anmeldung:
**04.02.87 Patentblatt 87/6**

(45) Bekanntmachung des Hinweises auf die Patenterteilung:
**18.01.89 Patentblatt 89/3**

(84) Benannte Vertragsstaaten:
**DE FR GB NL SE**

(56) Entgegenhaltungen:
**EP-A- 0 123 782**
**DE-A- 3 208 561**
**DE-A- 3 311 682**
**GB-A- 2 126 124**

(73) Patentinhaber: **ROBERT BOSCH GMBH, Postfach 50,
D-7000 Stuttgart 1(DE)**

(72) Erfinder: **Beck, Siegfried, Stöfflerweg 8,
D-7000 Stuttgart 80(DE)**
Erfinder: **Blumendeller, Wilhelm, Grazer strasse 19,
D-7000 Stuttgart 30(DE)**
Erfinder: **Delfs, Joachim, Schubartstrasse 4,
D-7254 Hemmingen(DE)**
Erfinder: **Gassmann, Heiner, Jakobstrasse 3,
D-7300 Esslingen 1(DE)**
Erfinder: **Haas, Heino, Dipl.-Ing., Weinstrasse 9,
D-7129 Zaberfeld(DE)**

## Beschreibung

### Stand der Technik

Die Erfindung geht aus von einem Lufttrockner für Druckluftanlagen, insbesondere für Druckluftbremsanlagen von Kraftfahrzeugen, nach der Gattung des Anspruchs 1.

Bei einem bekannten Lufttrockner dieser Art (DE-A 3 232 742) ist die Trockenmittelbox als eine als Wegwerfteil konzipierte komplette Baueinheit ausgebildet, die auf dem Lufttrocknergehäuse verschraubt und in der montierten Stellung gegen unbeabsichtigtes Lösen vom Lufttrocknergehäuse gesichert ist. Der hutartige Gehäusemantel ist nach Füllen mit Trockenmittel und Einlegen der erforderlichen Filterschichten auf der Stirnseite des den Gehäusemantel abschließenden Deckels umbördelt und mit diesem damit unlösbar verbunden.

Solche Lufttrockner mit komplett austauschbarer Trockenmittelbox sind für kleinere Druckluftanlagen mit geringem Luftbedarf optimal. Bei größeren Druckluftanlagen mit großem Luftbedarf und entsprechend voluminösem Lufttrockner ist es kostengünstiger, nicht die Trockenmittelbox komplett zu tauschen, sondern nur die verbrauchten Teile, wie Luftfilter und Trockenmittel, auszuwechseln.

### Vorteile der Erfindung

Der erfindungsgemäße Lufttrockner für Druckluftanlagen mit den kennzeichnenden Merkmalen des Anspruchs 1 hat den Vorteil, die Trockenmittelbox zwecks Austausch der Verbrauchsteile nach dem Abschrauben vom Lufttrocknergehäuse sehr einfach und zeitsparend demontieren und wieder zusammensetzen zu können. Die Verbrauchsteile, wie Vorfilter und Feinfilter und Trockenmittel, sind nach Demontage sofort zugänglich und leicht auswechselbar. Das anschließende Zusammensetzen der Trockenmittelbox ist gleich einfach und in ergonomischer Weise durchführbar. Während des Betriebes des Lufttrockners im Kraftfahrzeug ist die Trockenmittelbox gegen unbeabsichtigtes Zerfallen durch Lösen der Verbindung zwischen Außenmantel und Deckel zuverlässig gesichert.

Durch die in den weiteren Ansprüchen aufgeführten Maßnahmen sind vorteilhafte Weiterbildungen und Verbesserungen des im Anspruch 1 angegebenen Lufttrockners möglich.

Eine vorteilhafte Ausführungsform der Erfindung ergibt sich hierbei aus Anspruch 2. Durch diese Ausbildung der Sicherungsscheibe wird der Bajonettverschluß zwischen Gehäusemantel und Deckel gegen Verschmutzung geschützt, so daß stets ein leichtes Lösen des Verschlusses gewährleistet ist.

Eine vorteilhafte Ausführungsform der Erfindung ergibt sich auch aus Anspruch 3, insbesondere in Verbindung mit Anspruch 4 und 5. Durch dieses Maßnahmen ist der aus Gründen der Vorspannung des Trockenmittels im Behälter axial bewegliche Lochdeckel bei Demontage gegen unbeabsichtigtes Herausfallen aus dem Behälter nach Abziehen des Außenmantels gesichert. Durch Hochklappen des Federbügels und radiales Zusammendrücken dieses können die Einsteckstifte aus den Einstecköffnungen herausgezogen und der Federbügel entfernt werden. Danach kann der Lochdeckel aus dem Behälter herausgezogen und das Trockenmittel ausgewechselt werden. Ein in bekannter Weise den Behälter mantelförmig umgebendes Luftfilter kann nach Abziehen des Gehäusemantels ebenfalls sehr einfach getauscht werden. Im montierten Zustand kann der Federbügel in den topfartigen Deckel eingeschwenkt werden und liegt damit außerhalb des Angriffsbereiches der Andruckfeder.

Eine vorteilhafte Ausführungsform der Erfindung ergibt sich auch aus Anspruch 6, insbesondere in Verbindung mit Anspruch 7 und 8. Durch diese Maßnahmen läßt sich der Behälter sehr schnell vom Deckel abziehen und wieder auf den Deckel aufsetzen. Damit kann in einfacher Weise ein zwischen Deckel und Behälter gehaltenes etwa ringförmiges Vorfilter gewechselt werden.

### Zeichnung

Die Erfindung ist anhand eines in der Zeichnung dargestellten Ausführungsbeispiels in der nachfolgenden Beschreibung näher erläutert. Es zeigen:

Fig. 1 einen Längsschnitt eines Lufttrockners,
Fig. 2 einen Schnitt des Lufttrockners gemäß Linie II–II in Fig. 1.

### Beschreibung des Ausführungsbeispiels

Der in der Zeichnung dargestellte Lufttrockner, der insbesondere für Druckluftbremsanlagen von Fahrzeugen bestimmt ist, kann sowohl ein Ein-Behälter-Lufttrockner als auch ein Zwei-Behälter-Lufttrockner sein. Der Lufttrockner weist ein Gehäuse 10 mit einem Einlaßanschluß 11 und einem in der Schnittebene nicht zu sehenden Auslaßanschluß auf. Der Einlaßanschluß 11 ist in der Druckluftanlage mit einem Luftkommpressor und der Auslaßanschluß mit einem Druckluftspeicher verbunden. Der Einlaßanschluß 11 mündet in einem etwa ringförmigen Einlaßkanal 13 und der Auslaßanschluß steht mit einem Zentralkanal 14 eines vom Einlaßkanal 13 umgebenden Anschlußstutzens 15 in Verbindung. Der Anschlußstutzen 15 wird hier von einem in das Gehäuse 10 eingeschraubten Rohrstück 16 gebildet, das mit einem Teilabschnitt über das Gehäuse 10 vorsteht und hier ein Außengewinde 17 zur verschraubbaren Befestigung einer Trockenmittelbox 18 trägt. Die Trockenmittelbox 18 weist einen hutartigen Außenmantel 19 auf, der an seiner offenen Stirnseite einen massiven Deckel 20 an dessen Umfang übergreift und mit diesem im Übergreifbereich mittels eines Bajonettverschlusses 21 lösbar verbunden ist.

Der Deckel 20 weist eine rohrstutzenartige Zentralnabe 22 mit einer Zentralöffnung 23 auf, deren Innendurchmesser etwa dem Außendurchmesser des Anschlußstutzens 15 am Gehäuse 10 entspricht.

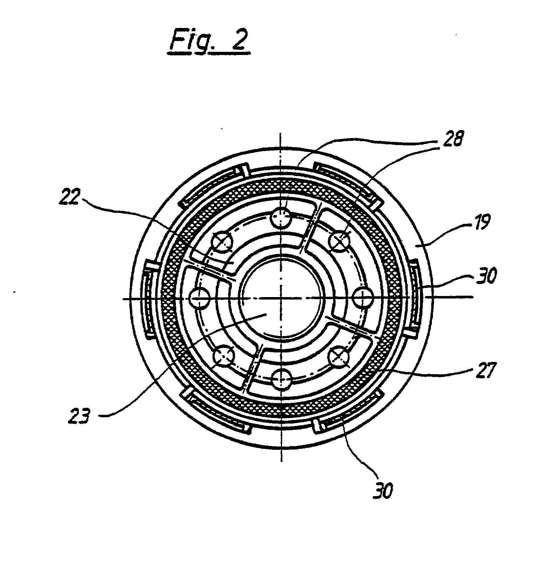

Die Zentralnabe 22 trägt ein Innengewinde 24, das mit dem Außengewinde des Anschlußstutzens 15 verschraubbar ist. Im aufgeschraubten Zustand liegt der Deckel 20 mit einer ringförmigen Auflagefläche 25 auf einem Stirnflansch 26 des Gehäuses 10 auf. In der Auflagefläche 25 liegt ein Dichtungsring 27 ein. Im Deckel 20 sind eine Vielzahl von ringförmig angeordneten Einlaßöffnungen 28 vorgesehen, die bei auf das Gehäuse 10 aufgesetzter Trockenmittelbox 18 den im Gehäuse 10 stirnseitig offenen ringförmigen Einsatzkanal 13 abschließen. Zur Sicherung der Bajonettverbindung zwischen Außenmantel 19 und Deckel 20 ist auf der Stirnseite des Außenmantels 19 eine ringförmige Sicherungsscheibe 29 angeordnet, die sich in Radialrichtung unmittelbar an die Auflagefläche 25 des Deckels 20 anschließt und am Außenumfang des Deckels 20 zentriert ist. Die Sicherungsscheibe 29 weist eine solche radiale Ringbreite auf, daß sie vom Außenumfang des Deckels 20 bis zum Außenrand des Außenmantels 19 reicht und damit die Stirnseite des Außenmantels 19 und den Spaltbereich des Bajonettverschlusses 21 zwischen Deckel 20 und Außenmantel 19 weitgehend staubdicht abdeckt. Die Sicherungsscheibe 29 trägt von der Scheibenfläche axial abstehende Sperrklinken 30, die gleichmäßig am Umfang der Sicherungsscheibe 29 verteilt angeordnet sind (Fig. 2) und in die bei verschlossenem Bajonettverschluß 21 freien Räume des letzteren eingreifen und damit ein Verdrehen der Bajonettverschlußteile in Richtung Lösen des Verschlusses verhindern. Bei mit dem Gehäuse 10 verbundener Trockenmittelbox 18 liegt die Sicherungsscheibe 29 in einem Teilbereich an dem Stirnflansch 26 des Gehäuses 10 an und ist dadurch gegen axiales Verschieben gesichert. Der Bajonettverschluß 21 kann erst nach axialem Abziehen der Sicherungsscheibe und damit nach Austreten der Sperrklinken 30 aus dem Bajonettverschluß 21 gelöst werden. Die Sicherungsscheibe 29 kann wiederum erst nach Abschrauben der Trockenmittelbox 18 vom Gehäuse 10, d.h. nach Abschrauben des Deckels 20 vom Anschlußstutzen 15, aus dem Bajonettverschluß 21 ausgezogen werden. Im montierten Zustand sind Deckel 20 und Gehäuse 10 durch eine Sicherungsschraube 31 gegen Lösen der Schraubverbindung gesichert.

Die Trockenmittelbox 18 weist einen zylinderförmigen Innenbehälter 32 auf, der zum Deckel 20 hin sich etwa trichterförmig verjüngt und am Boden des trichterförmigen Wandbereichs 33 die Zentralnabe 22 am Außenumfang eines vom Deckel ins Behälterinnere vorspringenden Nabenabschnittes 34 kraftschlüssig umgreift. Hierzu trägt der den Nabenabschnitt 34 umgebende Öffnungsbereich der Behälterwand einen federnden Kragen 35, der durch Umbiegung des Öffnungsrandes hergestellt ist. Zwischen dem trichterförmigen Wandbereich 33 und dem Deckel 20 ist in dessen die Einlaßöffnungen 28 aufweisenden Deckelbereich ein etwa ringförmiges Vorfilter 36 gehalten. Das Vorfilter 36 dient zum Abscheiden von Verunreinigungen, insbesondere Öl- und Kondensattröpfchen, die in der einströmenden Kompressorluft mitunter enthalten sind. Das Vorfilter 36 ist lose eingelegt und wird von dem auf dem Nabenabschnitt 34 kraftschlüssig gehaltenen Innenbehälter 32 in seiner Anlagestellung an dem Deckel 20 gehalten. Nach Abziehen des Innenbehälters 32 von dem Nabenabschnitt 34 kann das Vorfilter 36 ausgetauscht werden.

Der vorzugsweise aus Blech gefertigte Innenbehälter 32 ist mit einem Trockenmittel 40 gefüllt und auf der dem trichterförmigen Wandbereich 33 gegenüberliegenden offenen Stirnseite von einem topfförmigen Lochdeckel 37 verschlossen. Der im Innenbehälter 32 axial verschiebbare Lochdeckel 37 wird von einer Druckfeder 38 beaufschlagt, die am Boden des hutartigen Außenmantels 19 sich abstützt und dort am Lochdeckel 37 zentriert ist. Über Lochdeckel 37 und Druckfeder 38 wird das Trockenmittel 40 vorgespannt. Der Lochdeckel 37 ist gegen Herausfallen aus dem Innenbehälter 32 bei Demontage der Trockenmittelbox 18 durch einen Federbügel 39 gesichert. Der Federbügel 39 trägt zwei endseitig abgewinkelte Steckstifte 41, 42, die in zwei diametral gegenüberliegende Einsecköffnungen 43, 44 in der Zylinderwand des Innenbehälters 32 eingreifen. Der federelastisch ausgebildete Federbügel 39 ist bogenförmig gewölbt, wobei sein Bogenradius kleiner bemessen ist als der Innenradius des Lochdeckels 37. Auf diese Weise läßt sich der Federbügel 39 in den topfartigen Lochdeckel 37 einschwenken und liegt außerhalb des Abstützbereiches der Druckfeder 38 am Lochdeckel 37. Die Einsecköffnungen 43, 44 sind in einer solchen Höhe vom Grund des trichterförmigen Wandbereiches 33 angeordnet, daß sie bei maximaler Füllhöhe des Trockenmittels 40 unmittelbar oberhalb des Randes des Lochdeckels 37 liegen.

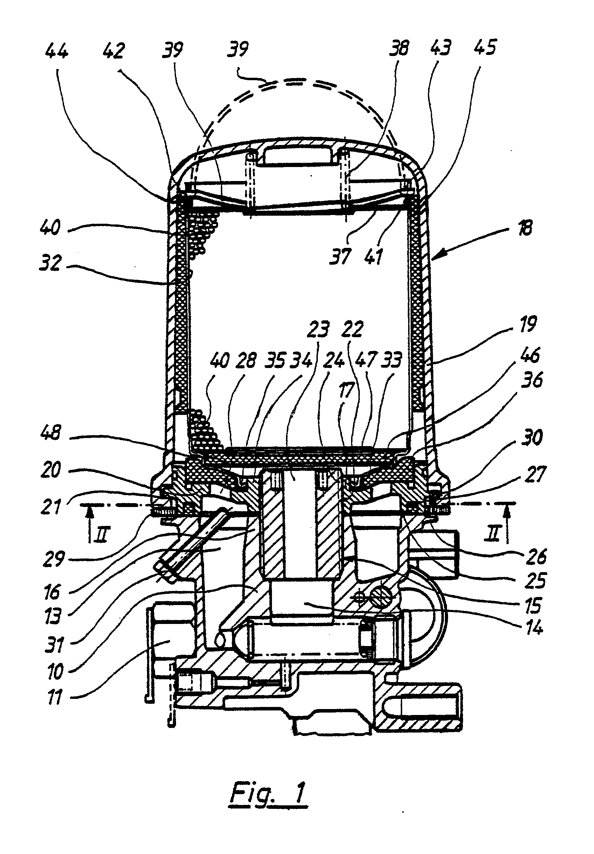

Der Austausch des Trockenmittels 40 erfolgt über die offene Stirnseite des Innenbehälters 32 nach Entfernen des Lochdeckels 37. Hierzu ist nach Abziehen des hutartigen Außenmantels 19 von dem mit dem Deckel 20 verbundenen Innenbehälter 32 der Federbügel 39 in die in Fig. 1 strichliniert dargestellte Stellung hochzuschlagen. Durch radiales Zusammendrücken des Federbügels 39 werden die Steckstifte 41, 42 aus den Einsecköffnungen 43, 44 herausgezogen und der Federbügel läßt sich entfernen. Danach kann der Lochdeckel 37 abgezogen und das Trockenmittel 40 gewechselt werden.

Wie aus Fig.1 ersichtlich, umgibt der hutartige Gehäusemantel 19 den Innenbehälter 32 unter Belassung eines ringförmigen Zwischenraums. Dieser Zwischenraum ist mit einem Filtermantel 45 ausgefüllt. Am Grund des trichterförmigen Wandbereiches 33 kann im Innenbehälter 32 ein Feinfilter 46 angeordnet sein, das aus Festigkeitsgründen zwischen zwei biegesteifen Lochscheiben 47, 48 eingelegt ist.

Die Wirkungsweise des beschriebenen Lufttrockners sei nachfolgend noch kurz skizziert:

Bei Betrieb des Lufttrockners ist die Trockenmittelbox 18 in der in Fig. 1 skizzierten Weise auf das Gehäuse 10 aufgeschraubt. Die vom Luftkompressor über den Einlaßanschluß 11 kommende feuchte Druckluft strömt durch den ringförmigen Einlaßkanal 13 und tritt in die Trockenmittelbox über die Einlaßöffnungen 28 ein. Hier durchströmt die Luft zunächst das Vorfilter 36, in welchem Kondensat- und Öltröpfchen abgeschieden werden. Nach Durchströmen des Filtermantels 45 tritt die Druckluft über den Lochdeckel 37 in den Innenbehälter 32 ein und durchströmt das Trockenmittel 40, das der Luft Feuchtigkeit entzieht. Die getrocknete Druckluft verläßt über das Feinfilter 46, das die Funktion eines Nachfilters hat, den Innenbehälter 32 und strömt in den Zentralkanal 14. Von dort gelangt die trockene Druckluft über den Auslaßanschluß zu dem Druckluftspeicher der Druckluftanlage.

Zur Regenerierung der Trockenmittelbox 18 im Zuge von Wartungsarbeiten sind die Verbrauchsteile wie Trockenmittel 40, Vorfilter 36, Filtermantel 45 und ggf. Feinfilter 46 auszutauschen. Zur Demontage der Trockenmittelbox 18 ist zunächst die Trockenmittelbox 18 nach Lösen der Sicherungschraube 31 von dem Gehäuse 10 abzuschrauben. Danach liegt die Sicherungsscheibe 29 auf der Stirnseite der Trockenmittelbox 18 frei und kann axial abgezogen werden, wodurch die Sperrklinken 30 aus dem Bajonettverschluß 21 austreten. Nach Lösen des Bajonettverschlusses 21 wird der Außenmantel 19 vom Deckel 20 der Trockenmittelbox 18 abgezogen. Der Federbügel 39 ist – wie in Fig.1 strichliniert skizziert – hochzuklappen und zusammenzudrücken. Dadurch rasten die Einsteckstifte 41, 42 des Federbügels 39 aus den Einstecköffnungen 42, 43 aus. Der Lochdeckel 37 kann nunmehr aus dem Innenbehälter 32 ausgezogen und das Trockenmittel 40 ausgeleert werden. Nach Entfernen des Trockenmittels sind die am Grund des Innenbehälters lose einliegenden Lochscheiben 47, 48 mit dazwischenliegendem Feinfilter 46 zugänglich. Das Feinfilter 46 kann gewechselt werden. In gleicher Weise kann der am Außenumfang des Innenbehälters 32 frei liegende Filtermantel 45 getauscht werden. Soll das Vorfilter 36 ebenfalls ausgewechselt werden, so ist der Innenbehälter 32 von dem Nabenabschnitt 34 der Zentralnabe 22 abzuziehen. Danach ist das Vorfilter 36 zugänglich und kann gewechselt werden.

Die Montage der Trockenmittelbox 18 erfolgt in umgekehrter Reihenfolge. Nach Aufsetzen des neuen Vorfilters 36 wird der Innenbehälter 32 mit seinem federnden Kragen 35 wieder auf die Zentralnabe 22 aufgeschoben. Danach werden die Lochscheiben 47, 48 mit einliegendem neuen Feinfilter 46 eingelegt und der Innenbehälter 32 mit der vorgeschriebenen Menge von Trockenmittel 40 gefüllt. Danach wird der Lochdeckel 37 in den Innenbehälter 32 eingesetzt und durch den Federbügel 39 gesichert. Der Federbügel wird in den Lochdeckel 37 eingeschwenkt und nimmt seine in Fig.1 ausgezogen dargestellte Stellung ein. Danach wird die Druckfeder 38 auf den Lochdeckel 37 aufgesetzt und der Außenmantel 19 über den mit einem neuen Filtermantel 45 versehenen Innenbehälter 32 geschoben, bis die Druckfeder 38 an dem Boden des Außenmantels 19 zur Anlage kommt. Unter Zusammenpressen der Druckfeder 38 wird nunmehr der Außenmantel 19 so weit über den Deckel 20 geschoben, bis die Verschlußteile des Bajonettverschlusses 21 aneinanderliegen und durch Drehung des Außenmantels 19 miteinander verrastet werden. Danach wird die Sicherungsscheibe 20 auf die Stirnseite des Außenmantels 19 aufgesetzt und mit ihren Sperrklinken 30 in die nach Verschließen des Bajonettverschlusses 21 verbleibenden Öffnungen eingeschoben. Danach wird die Trockenmittelbox 18 auf das Gehäuse 10 aufgesetzt und das Innengewinde 24 der Zentralnabe 22 mit dem Außengewinde 17 des Anschlußstutzens 15 verschraubt. Als letztes wird die Sicherungsschraube 31 wieder eingedreht. Sie verhindert eine Drehbewegung des Deckels 20 und damit ein Lösen der Schraubverbindung.

**Patentansprüche**

1. Lufttrockner für Druckluftanlagen, insbesondere für Druckluftbremsanlagen von Kraftfahrzeugen, mit einem Gehäuse (10), das einen Einlaßanschluß (11) und einen Auslaßanschluß aufweist, der mit einem Zentralkanal (14) in einem ein Außengewinde (17) tragenden Anschlußstutzen (15) in Verbindung steht, mit einer vom Gehäuse (10) abnehmbaren Trockenmittelbox (18), die einen etwa hutförmigen Außenmantel (19) und einen diesen stirnseitig abschließenden Deckel (20) aufweist, der vom Außenmantel (19) am Umfang übergriffen wird und ein in einer Zentralöffnung (23) angeordnetes, mit dem Außengewinde (17) des Anschlußstutzens (15) verschraubbares Innengewinde (22) trägt, dadurch gekennzeichnet, daß der Deckel (20) und der Außenmantel (19) im Übergreifbereich mittels eines Bajonettverschlusses (21) lösbar miteinander verbunden sind, daß eine stirnseitig angeordnete rinförmige Sicherungsscheibe (29) mit axial vorstehenden Sperrklinken (30) in den Bajonettverschluß (21) in einer dessen Lösen verhindernden Weise eingreift und daß das Gehäuse (10) einen Ringflansch (26) trägt, der in einem solchen Abstand den Anschlußstutzen (15) umgibt, daß bei an das Gehäuse (10) angeschraubter Trockenmittelbox (18) die Sicherungsscheibe (29) an dem Ringflansch (26) anliegt.

2. Lufttrockner nach Anspruch 1, dadurch gekennzeichnet, daß die Sicherungsscheibe (29) am Außenumfang des Deckels (20) der Trockenmittelbox (18) zentriert ist und eine bis zum Außenrand des Außenmantels (19) der Trockenmittelbox (18) reichende Ringbreite aufweist.

3. Lufttrockner nach Anspruch 1 oder 2 dadurch gekennzeichnet, daß am Deckel (20) der Trockenmittelbox (18) ein Innenbehälter (32) zur Aufnahme des Trockenmittels (40) befestigt ist, der die Zentralöffnung etwa trichterförmig umfaßt und auf der dieser gegenüberliegenden Stirnseite mit einem in Achsrichtung verschiebbaren, federbelasteten topfförmigen Lochdeckel abgedeckt ist, und daß der Innenbehälter (32) nahe seinem offenen Ende zwei diametral gegenüberliegende Einstecköffnungen (43, 44) aufweist und daß ein mit zwei endseitig abgewinkelten Steckstiften (41, 42) in die Einstecköffnungen (43, 44) eingreifender Federbügel (39) vorgesehen ist, der derart ausgebildet ist, daß durch Zusammendrücken des Federbügels (39) die Einsteckstifte (41, 42) aus den Einstecköffnungen (43, 44) ausziehbar sind.

4. Lufttrockner nach Anspruch 3, dadurch gekennzeichnet, daß die Einstecköffnungen (43, 44) in solcher Höhe über dem trichterförmigen Grund des Innenbehälters (32) angeordnet sind, daß sie bei maximaler Füllhöhe des Trockenmittels (40) unmittelbar oberhalb des Lochdeckelrandes liegen.

5. Lufttrockner nach Anspruch 3 oder 4, dadurch gekennzeichnet, daß der Federbügel (39) bogenförmig gewölbt und sein Bogenradius kleiner als der Innenradius des Lochdeckels (37) bemessen ist.

6. Lufttrockner nach einem der Ansprüche 3–5, dadurch gekennzeichnet, daß der Deckel (20) der Trockenmittelbox (18) eine das Innengewinde (24) tragende rohrstutzenartige Zentralnabe (22) mit zum Innenbehälter (32) axial vorspringendem Nabenabschnitt (34) aufweist und daß der Innenbehälter (32) mit seinem trichterförmigen Wandbereich (33) den Nabenabschnitt (34) kraftschlüssig umgreift.

7. Lufttrockner nach Anspruch 6, dadurch gekennzeichnet, daß die den Nabenabschnitt (34) umgebende Öffnung des trichterförmigen Wandbereichs (33) des Innenbehälters (32) einen vorzugsweise durch Materialumbiegen gewonnenen federnden Kragen (35) trägt.

8. Lufttrockner nach Anspruch 6 oder 7, bei welchem der Deckel (20) der Trockenmittelbox (18) Lufteingangsöffnungen (28) aufweist, die von einem Luftfilter (36) abgedeckt sind, dadurch gekennzeichnet, daß der trichterförmige Wandbereich (33) des Innenbehälters (32) mit axialem Abstand in Luftströmungsrichtung hinter den Lufteingangsöffnungen (28) liegt und daß das vorzugsweise ringförmig ausgebildete Luftfilter (36) zwischen dem Deckel (20) und dem trichterförmigen Wandbereich (33) des Innenbehälters (32) lose einliegt.

## Claims

1. Air drier for compressed-air systems, in particular for air brake systems of motor vehicles, having a housing (10) which has an inlet connection (11) and an outlet connection which communicates with a central chanel (14) in a connecting sleeve (15) bearing an external thread (17), having a drying agent box (18) which can be removed from the housing (10) and has an approximately hatshaped outer jacket (19) and a cover (20), which occludes the latter at the end and is overlapped at the periphery by the outer jacket (19) and bears an internal thread (22) which is arranged in a central opening (23) and can be screwed to the external thread (17) of the connecting sleeve (15), characterized in that, in the overlap region, the cover (20) and the outer jacket (19) are connected to one another releasably by means of a bayonet closure (21), in that an annular lock washer (29) arranged on the end face and having axially protruding catches (30) engages in the bayonet closure (21) in a manner which prevents the release of the latter, and in that the housing (10) bears an annular flange (26) which surrounds the connecting sleeve (15) at a distance such that, when the drying agent box (18) is screwed to the housing (10), the lock washer (29) rests against the annular flange (26).

2. Air drier according to Claim 1, characterized in that the lock washer (29) is centred at the outer periphery of the cover (20) of the drying agent box (18) and has a ring width extending as far as the outer edge of the outer jacket (19) of the drying agent box (18).

3. Air drier according to Claim 1 or 2, characterized in that an inner container (32) for accommodating the drying agent (40) is fastened to the cover (20) of the drying agent box (18), surrounds the central opening approximately in the form of a funnel and, at the end opposite said opening, is covered with an axially displaceable, spring-loaded potshaped perforated cover, and in that, near to its open end, the inner container (32) has two diametrically opposite insertion openings (43, 44), and in that a spring clip (39) which engages in the insertion openings (43, 44) by two insertion pins (41, 42) bent over at the ends is provided and is of a design such that by compression of the spring clip (39), the insertion pins (41, 42) can be pulled out of the insertion openings (43, 44).

4. Air drier according to Claim 3, characterized in that the insertion openings (43, 44) are arranged at such a height above the funnel-shaped base of the inner container (32) that, at the maximum filling level of the drying agent (40), they lie immediately above the edge of the perforated cover.

5. Air drier according to Claim 3 or 4, characterized in that the spring clip (39) is curved in the shape of an arc and its arc radius is dimensioned smaller than the inside radius of the perforated cover (37).

6. Air drier according to one of Claims 3–5, characterized in that the cover (20) of the drying agent box (18) has a pipe socket-type central hub (22) bearing the internal thread (24) and having a hub section (34) which protrudes axially towards the inner container (32), and in that the inner container (32) fits nonpositively by its funnel-shaped wall region (33) round the hub section (34).

7. Air drier according to Claim 6, characterized in that the opening of the funnel-shaped wall region (33) of the inner container (32), which opening surrounds the hub section (34), bears a resilient collar (35) which is preferably obtained by bending over the material.

8. Air drier according to Claim 6 or 7, in which the cover (20) of the drying agent box (18) has air inlet openings (28) which are covered by an air filter (36), characterized in that the funnel-shaped wall region (33) of the inner container (32) lies with axial spacing in the direction of air flow, downstream of the air inlet openings (28), and in that the air filter (36), which is preferably of annular design, lies loosely between the cover (20) and the funnel-shaped wall region (33) of the inner container (32).

## Revendications

1. Sécheur d'air pour des installations d'air comprimé, notamment pour des installations de freinage à air comprimé de véhicules automobiles, avec un carter (10) qui présente un raccordement d'entrée (11) et un raccordement de sortie, qui est relié à un canal central (14) situé dans une tubulure de raccordement (15) portant un filetage extérieur (17), avec un boîtier de produit séchant (18) extractible du carter (10), qui présente une enveloppe extérieure (19) approximativement en forme de chapeau et un couvercle (20) isolant celle-ci côté frontal, qui est recouvert à la périphérie par l'enveloppe extérieure (19) et porte un filetage intérieur (22) susceptible d'être vissé sur le filetage extérieur (17) de la tubulure de raccordement (15), disposé dans un orifice central (23), caractérisé en ce que le couvercle (20) et l'enveloppe extérieure (19) sont reliés de manière démontable dans la zone de recouvrement au moyen d'une fermeture à baïonnette (21), qu'une rondelle de sécurité (29) de forme annulaire à cliquets de blocage (30) saillant axialement, disposée côté frontal, est en prise dans la fermeture à baïonnette (21) d'une manière empêchant son desserrage et que le carter (10) porte un rebord annulaire (26) qui entoure la tubulure de raccordement (15) avec un écartement tel que le boîtier de produit séchant (18) vissé sur le carter (10) appuie la rondelle de sécurité (29) sur la bride annulaire (26).

2. Sécheur d'air selon la revendication 1, caractérisé en ce que la rondelle de sécurité (29) est centrée sur la périphérie du couvercle (20) du boîtier de produit séchant (18) et présente une largeur annulaire atteignant le bord extérieur de l'enveloppe extérieure (19) du boîtier de produit séchant (18).

3. Sécheur d'air selon la revendication 1 ou 2, caractérisé en ce qu'un récipient intérieur (32) destiné à recevoir le produit séchant (40) est fixé sur le couvercle (20) du boîtier de produit séchant (18), récipient qui comprend un orifice central approximativement en forme d'entonnoir et qui est recouvert d'un couvercle à trou en forme de pot, chargé par un ressort, mobile en direction axiale, situé sur le côté frontal opposé à celui-ci, et en ce qu'au voisinage de son extrémité ouverte, le récipient intérieur (32) présente deux ouvertures d'enfichage (43, 44) diamètralement opposées et en ce qu'un étrier élastique (39) ayant deux goupilles d'enfichage (41, 42) repliées côté extrémité, est prévu venant en prise dans les orifices d'enfichage (43, 44), étrier qui est réalisé de façon à ce que les goupilles d'enfichage (41, 42) soient extractibles hors des orifices d'enfichage (43, 44) par compression de l'étrier élastique (39).

4. Sécheur d'air selon la revendication 3, caractérisé en ce que les orifices d'enfichage (43, 44) sont disposées à une hauteur telle, par rapport au fond en forme d'entonnoir du récipient intérieur (32) qu'elles se situent directement au-dessus du bord de couvercle à trou pour la hauteur maximale de remplissage du produit séchant (40).

5. Sécheur d'air selon la revendication 3 ou 4, caractérisé en ce que l'étrier élastique (39) est bombé en forme coudée et que son rayon de courbure est plus petit que le rayon intérieur du couvercle à trous (37).

6. Sécheur d'air selon l'une des revendications 3 à 5, caractérisé en ce que le couvercle (20) du boîtier de produit séchant (18) présente un moyeu central (22) en forme de tubulure portant le filetage intérieur (24), avec une section de moyeu (34) faisant saillie axialement par rapport au récipient intérieur (32) et en ce que le récipient intérieur (32) entoure, en exerçant une force, la section de moyeu, avec la zone de paroi (33) en forme d'entonnoir.

7. Sécheur d'air selon la revendication 6, caractérisé en ce que l'orifice de la zone de paroi (33) en forme d'entonnoir du récipient intérieur (32), entourant la section de mayeu, porte un collet (35) élastique obtenu de préférence par repliage de matière.

8. Sécheur d'air selon la revendication 6 ou 7, dans lequel le couvercle (20) du boîtier de sécheur d'air (18) présente des orifices d'entrée d'air (28), qui sont recouvertes par un filtre à air (36), caractérisé en ce que la zone de paroi (33) du récipient intérieur (12) en forme d'entonnoir se situe derrière les orifices d'entrée d'air (28) avec un écartement axial dans le sens de l'écoulement et en ce que le filtre à air (36) réalisé de préférence de forme annulaire est introduit lâche entre le couvercle (20) et la zone de paroi (33) en forme d'entonnoir du récipient intérieur (32).

Fig. 1

## Fig. 2